Europäisches Patentamt

European Patent Office

Office européen des brevets

(11) Publication number: **0 304 389**
**A2**

## (12) EUROPEAN PATENT APPLICATION

(21) Application number: 88630102.7

(22) Date of filing: 02.06.88

(51) Int. Cl.⁴: **F 16 K 5/06**

(30) Priority: 21.08.87 US 88137

(43) Date of publication of application:
**22.02.89 Bulletin 89/08**

(84) Designated Contracting States: **DE FR GB IT**

(71) Applicant: **XOMOX CORPORATION**
**4444 Cooper Road**
**Cincinnati Ohio 45242 (US)**

(72) Inventor: **Gardner, John Federick**
**6415 Roth Ridge Drive**
**Loveland Ohio 45140-8583 (US)**

(74) Representative: **Weydert, Robert et al**
**OFFICE DENNEMEYER S.à.r.l. P.O. Box 1502**
**L-1015 Luxembourg (LU)**

(54) **Rotary outlet valve.**

(57) The rotary outlet valve for an outlet opening of a product vessel includes a valve body (20) having a bore formed therethrough along a central axis (22) to provide a central flow path (23) for product through the valve body (20). A valve seat assembly (40) is attached to the valve body (20) and circumscribes one end of the bore, with the assembly (40) having an upper surface (41) designed to be close coupled to an outlet opening of a vessel, and including a valve seat member (42). A valve closure member (50) is rotatably mounted within the valve body (20) for rotation between open and closed positions. The closure member (50) includes a top sealing surface (51) designed to sealingly interact with the seat member (42) of the valve seat assembly (40) when the closure member (50) is in closed position, and a pair of oppositely disposed, spaced support members (52,53) depending from the under-portions of the sealing surface (51) for rotatably mounting the closure member (50) within the valve body (20). A shaft (70) which is rotatable about a rotating axis (71) provides rotational movement to the closure member (50). In particular, the shaft (70) is attached to at least one of the spaced support members (52,53) within the valve body (20) along the rotation axis (71) and adjacent the periphery of the bore such that when the closure member (50) is rotated to open position within the valve body (20), the shaft (70) and the attached closure member (50) are located substantially radially outside of the central product flow path (23). In this way, unobstructed product flow is permitted along the flow path (23) through the bore.

FIG. 3

## Description

This invention relates to a rotary outlet valve for an outlet opening of a product vessel, and, more particularly, to a rotary outlet valve which provides a substantially uniform sealing surface virtually free of cavities within which product might collect in closed position, and permits unobstructed product flow when rotated to open position.

Rotary-type outlet valves are widely used in the industry in such diversified applications as chemical processing, pulp and paper processing, plastics, rubber, and other petrochemical processing, and the like. For example, rotary outlet control valves are often utilized in polymer reactors where the various polymers are maintained generally in a liquid state and brought together in a reactor vessel for polymerization. In these applications, as well as similar applications where a slurry or mixture of condensing, solidifying and/or particulate media is to be controlled by a rotary valve, often such material can collect within the reactor vessel or adjacent the outlet valve and tend to clog the valve or otherwise interfere with flow therethrough. These problems are especially acute where such materials can gather and solidify in cavities which are generally established between the closed rotary outlet valve and the product vessel interface.

In a conventional rotary outlet valve, problems can arise when product held within the reaction vessel or storage vessel collects within cavities adjacent the outlet valve/vessel interface and forms partially hardened material which can obstruct and, possibly, obturate the outlet completely.

One particular type of outlet valve widely used in the industry is known as a ram valve which is operated by a linear piston which reciprocates within a bore of the valve body. Generally, when in closed position, the upper surface of the ram valve is substantially flush with the bottom of the product vessel or tank. Upon opening, the ram valve piston is reciprocated downwardly and product flows downwardly and laterally around such piston. While this arrangement works well in certain applications, the required lateral deviation in product flow can often cause products such as the solidifying or condensing material mentioned above to build up on various surfaces, eventually causing reduced flow, outlet blockage, and/or damage to the outlet valve structure.

Another commonly used outlet valve for reaction vessels is a modified rotary ball valve arrangement such as the Design V500 Control Valve available from Fisher Controls of Marshalltown, Iowa. In particular, the Fisher valve utilizes a valve plug having a sealing surface with a sphere-like conformation and being rotatably mounted on a central shaft which extends through the product flow path. This modified ball-type valve is most often used to control flow of fluids, however, creates relatively large cavities adjacent the lower interior portions of the vessel at the valve interface, wherein condensing and solidifying materials can collect and cause clogging, reduced flow, and/or valve damage over time. Additionally, due to the relatively intrusive structure of the rotary control valve within the flow path of a product, the valve itself is obstructive to product flow and may not be useable in sanitary, polymer, and/or bioengineering services or similar applications due to the concomitant collection of product media on the obstructive valve parts in use. Similarly, degradation of the product media can also be caused by impact thereof upon projecting valve parts.

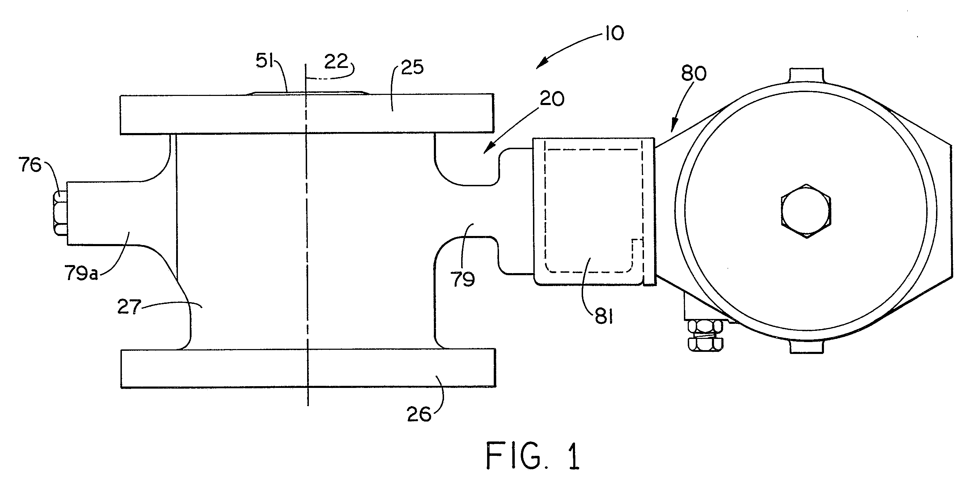

Various butterfly-type valves have also been used as outlet valves for various product vessels. An example of a rotary butterfly valve is shown in U.S. Patent 4,289,296 which issued to Bernd Krause on September 15, 1981. In particular, the butterfly valve shown in the Krause patent includes a valve body which contains a central bore, and a disc-like closure member having a spherical sealing surface about its periphery. The closure member is pivotally mounted in the bore about a rotation axis which is substantially perpendicular to the axis of the bore. The disc-like closure member is rotated between open and closed positions on its shaft, and the shaft is offset in two directions to provide eccentric cam-like action to the closure member as it is rotated. Such butterfly valves, however, also fail to provide a full opening of the bore as the disc-like closure member and the rotation shaft remain within the center of the bore in open position. Such obstruction enables the depositing and collection of product thereon over time which can lead to reduced flow, further obstruction of the outlet, and/or damage to the valve itself. Moreover, in mixing vessels and other storage tanks and the like, the product held therewithin must often be agitated to maintain its flowable character. Such agitation means are often located adjacent the outlet opening, and, as can be seen in drawing Fig. 1 of the Krause patent, the rotary butterfly valve would interfere with such agitation means within the vessel as it is rotated about its axis.

Consequently, a review of the outlet valves available in the industry emphasizes that there remain problems of providing and maintaining a substantially unobstructed flow path for liquid materials from mixing and storage vessels and the like, while simultaneously providing efficient and reliable closure of such outlets when desired. Heretofore, outlet valves available in the industry have been unable to consistently provide such valving requirements, and have experienced various clogging, flow obstruction, and other valve failures as a result.

It is an object of this invention to obviate the above-described problems.

It is another object of the present invention to provide a relatively simple and reliable rotary outlet valve which provides unobstructed product flow when in the open position, and a substantially uniform sealing face at the outlet when in closed position, wherein such sealing face is substantially free of cavities within which product might collect.

It is yet another object of the present invention to provide a rotary outlet valve featuring high-rate caming closure action for sealing a vessel outlet, and substantially unobstructed flow of product through such outlet when in the open position.

In accordance with one aspect of the present invention, there is provided a rotary outlet valve for an outlet opening of a product vessel, with such valve including a valve body having a bore formed therethrough along a central axis to provide a central flow path for product through the valve body. A valve seat assembly is attached to the valve body and circumscribes one end of the bore, with the assembly having an upper surface designed to be close coupled to an outlet opening of a vessel, and including a valve seat member which extends radially inwardly about the periphery thereof. A valve closure member is rotatably mounted within the valve body for rotation between open and closed positions. The closure member includes a top sealing surface designed to sealingly interact with the seat member of the valve seat assembly when the closure member is in closed position, and a pair of oppositely disposed, spaced support members depending from the under-portions of the sealing surface for rotatably mounting the closure member within the valve body. A shaft which is rotatable about a rotation axis provides rotational movement to the closure member. In particular, the shaft is attached to at least one of the spaced support members within the valve body along the rotation axis and adjacent the periphery of the bore such that when the closure member is rotated to open position within the valve body, the shaft and the attached closure member are located substantially radially outside of the central flow path for product. In this way, unobstructed product flow is permitted along the central axis of the bore.

While the specification concludes with claims particularly pointing out and distinctly claiming the present invention, it is believed that the same will be better understood from the following description taken in conjunction with the accompanying drawings in which:

Fig. 1 is a front elevational view of a rotary outlet valve assembly made in accordance with the subject invention;

Fig. 2 is an enlarged partial top plan view of the rotary outlet valve shown in Fig. 1, with the bottom portion of such rotary outlet valve being shown in break-away cross-section to enable illustration of internal details thereof;

Fig. 3 is a cross-sectional view of the rotary outlet valve of Fig. 2, taken along line 3-3 thereof, showing the closure member in closed position;

Fig. 4 is a cross-sectional view of the rotary outlet valve shown in Fig. 2, taken along line 4-4 thereof;

Fig. 5 is a fragmentary top plan view of an alternate embodiment of a rotary outlet valve made in accordance with the subject invention, with the lower half of this view being broken away to show internal details thereof; and

Fig. 6 is a fragmentary top plan view of yet another alternate embodiment of a rotary outlet valve made in accordance herewith, with the lower half being broken away to illustrate internal details thereof.

Referring now to the drawings in detail, wherein like numerals indicate the same elements throughout the views, Figs. 1 through 4 illustrate a preferred embodiment of a rotary outlet valve 10 made in accordance with the present invention. Referring to such figures, rotary outlet valve 10 is shown as including a valve body 20 having a bore 21 formed therethrough. Bore 21 is shown as being formed along a central longitudinal axis 22. While central axis 22 is shown as being substantially along the symmetrical center line of valve body 20 in the embodiment shown, it should be understood that it is not critical to the invention that central axis 22 be the exact center of valve body 20. In particular, the term "central" is used herein simply to connote an axis passing through the approximate center of valve body 20 from which various offsets, which will be discussed in further detail below, can be based. As will be described below, bore 21 provides and includes a central flow path 23 for product through valve body 20. It should be understood, however, that the central axis and the central flow path need not necessarily be located at the literal center of valve body 20. As illustrated in the drawing figures, it is preferred that central flow path 23 be formed coextensively with central axis 22, although such need not be the case.

Circumscribing one end of bore 21 of valve body 20 is valve seat assembly 40. Seat assembly 40 is preferably integrally formed with valve body 20 as an annular recess circumscribing bore 21. Located within such recess is a peripheral valve seat member 42 and a retainer ring 44 having an upper surface 41. Countersunk machine screws 43 or similar means for attaching retainer ring 44 to valve body 20 can be utilized. While any conventional seat/seal arrangement can be utilized in conjunction with bore 21 for interaction with valve closure member 50, it is preferred that this arrangement comprises a bi-directional axially pliant, pressure assisted seat as set forth in U.S. Patent 4,289,296 which issued September 15, 1981 to B. Krause, such patent being hereby incorporated herein by reference.

It should be noted that the upper surface 41 of retainer ring 44 is substantially flush with the adjacent portions of valve body 20. It is contemplated that a rotary outlet valve (i.e.10) made in accordance with the subject invention can be advantageously utilized in conjunction with the outlet of a vessel which includes internal agitation means therewithin for mixing or otherwise maintaining the liquid product in a flowable state. In such applications, it is important to provide a flush-mounted outlet valve which has no protuberances which extend substantially inwardly into such vessel, as the agitation means therewithin often operate within close tolerances of the outlet opening in such vessel. It is contemplated that an annular recess 46 will most preferably be provided about the outer periphery of upper surface 41 to provide clearance for a mounting gasket (not shown) for close coupling rotary outlet valve 10 to a product vessel.

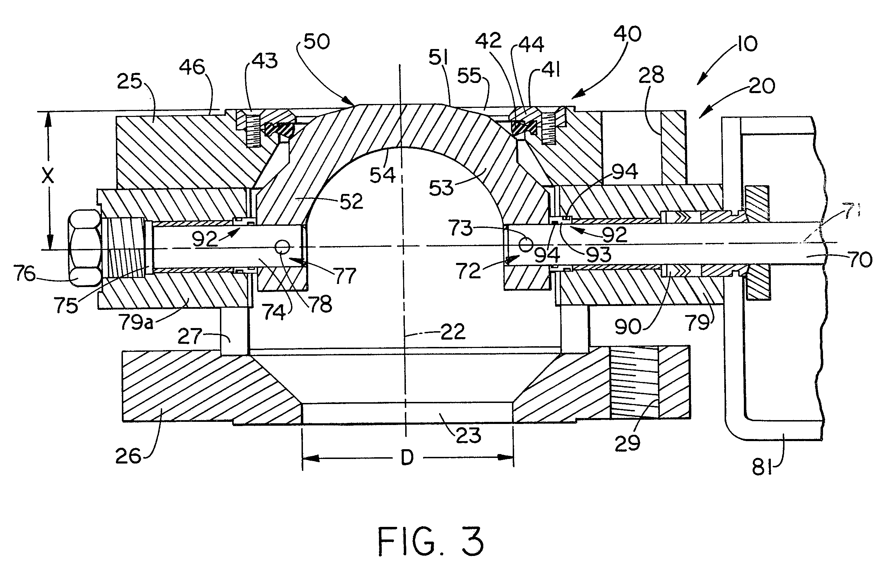

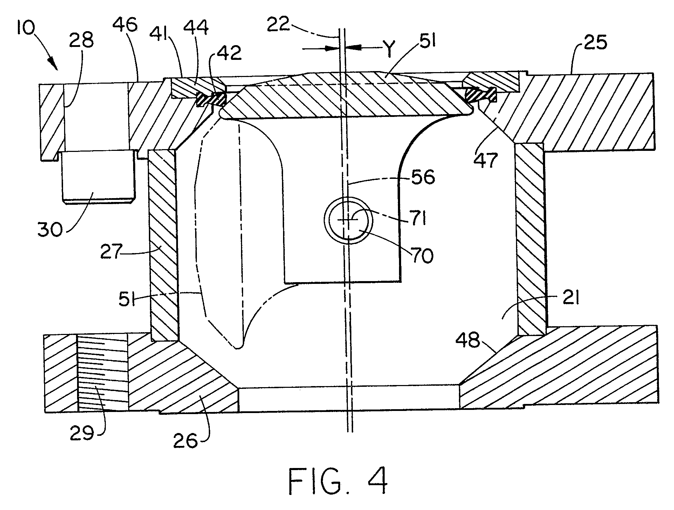

A valve closure member 50 is shown as including a top sealing surface 51 having a sphere-like conformation, as best illustrated in Fig. 4. Top sealing surface 51 is designed to sealingly interact with seat member 42 of assembly 40 when closure member 50 is in closed position (as shown in Figs. 3 and 4). Moreover, it is preferred that the exact conformation of top sealing surface 51 be designed to closely correspond to the structure of valve seat assembly 40 such that the resultant sealing face is substantially uniform and substantially free of cavities within which product might collect. In this regard, it is imperative that top sealing surface 51 be formed to closely correspond to the adjacent retainer ring 44, valve seat member 42, and upper surface 41 of assembly 40. In this way, resultant cavities 55 between these parts will be minimized and, accordingly, spaces within which product may condense, solidify or otherwise build up will be minimized. The resultant interface between closure member 50 and valve seat assembly 40 is preferably substantially planar in nature to provide a uniform sealing surface for the outlet of a product vessel.

Depending from the under-portion or under-surface 54 of top sealing surface 51 are a pair of oppositely disposed, spaced support members 52 and 53 of closure member 50. As shown best in Fig. 3, it is preferred that support members 52 and 53 feature arch-like conformation depending downwardly and outwardly, as will be described in greater detail below.

Shaft 70 is shown as being rotatably mounted within valve body 20 about a rotation axis 71 to provide rotational movement to closure member 50. In particular, shaft 70 is shown as being attached to the lower distal end of support member 53 adjacent the outer periphery of bore 21. To provide symmetric support for closure member 50, is it further preferred that a stub shaft 74 be rotatably mounted within valve body 20 to rotatably support the oppositely disposed support member 52, and is shown in Fig. 3 as being attached to the lower distal end of support member 52. It should be noted that while shaft 70 and stub shaft 74 could be considered as single discontinuous shaft, it is critical to the subject invention that the shaft providing rotational movement to closure member 50 hereof not extend through the central portions of bore 21 when valve closure member 50 is in open position. In particular, in order to ensure the unobstructed flow of product along the central flow path 23 of rotary outlet valve 10, it is imperative that the shaft be located substantially radially outside cental flow path 23 when closure member 50 is rotated to open position. While it is contemplated that a single continuous shaft might be utilized to connect support members 52 and 53 for rotational movement by providing a shaft with a radical bend or the like (not shown), it is preferred that a non-continuous shaft arrangement as illustrated in the drawing figures be utilized for simplicity and ease of assembly and maintenance. For example while a single continuous shaft having a medial bend portion (not shown) within bore 21 might be employed, it is believed that the added difficulties in manufacturing and assembling the outlet valve would be prohibitive in most applications. While shaft 70 and stub shaft 74 are shown as being attached to support members 53 and 52, respectively, by means of pins 73 and 78, it should be noted that any convenient manner of attachment known in the industry could be equally utilized. It has been found, however, that it is preferred to utilize a pin and slotted key or square drive and pin arrangement to increase the strength of these connections.

Shaft 70 is shown as being rotatably mounted within shaft sleeve 79 which houses conventional bearings 90. Similarly, stub shaft 74 is housed within a similar sleeve 79a which houses the bearing 75. A threaded seal plug 76 or similar means for retaining stub shaft 74 within valve body 20 is employed.

In a preferred embodiment, bearing seals 92 are mounted on shaft 70 and stub shaft 74 to protect bearings 75 and 90, respectively, from contact with product passing through rotary outlet valve 10. In particular, often rotary outlet valves of the type described herein are utilized in "dirty" fluid applications wherein product passing through such outlet valve includes abrasive suspensions, polymerizing materials, or other media which might be harmful to the bearings. Bearing seals 92 preferably each comprise a circular spacer disk 93 and a pair of offset O-ring seals 94. These sealed spacer rings help prevent product from migrating from within bore 21 to bearings 75 and 90, respectively. While such bearing seals 92 are preferred, they are not critical to the present invention.

Shaft 70 is rotated about axis 71 by a source of rotational force 80 such as a hydraulically controlled actuator or the like. Shaft 70 extends from such source of rotational force 80 through housing 81 into valve body 20 as described above. Valve body 20 itself comprises a pair of oppositely disposed, spaced parallel flanges 25 and 26, respectively, and a central, generally cylindrical housing 27. Sleeves 79 and 79a are preferably integrally cast with the balance of valve body 20, but could also be individually attached thereto. Valve body 20 is preferably designed for relatively simple attachment to a storage or mixing vessel. Particularly, upper flange 25 is formed with holes 28 for coupling with a vessel, such as by bolts 30 as shown in Fig. 4. Similarly, lower flange 26 includes attachment holes 29 for coupling with a corresponding flange of an outlet pipe or similar structure.

As illustrated in Figs 3 and 4, and as will be explained in greater detail below, closure member 50 is pivotally moved by shaft 70 to open and close rotary outlet valve 10. As seen best in Fig. 3, top sealing surface 51 is offset longitudinally a distance X from rotation axis 71, and sealing surface 51 is thereby eccentrically mounted with respect to axis 71. As further illustrated in Fig. 4, shaft 70 (and particularly its collinear rotation axis 71) is also laterally offset a distance Y in a direction perpendicular to central axis 22. In this regard, it should be understood that there are two eccentricities present, whereby the top sealing surface 51 of closure member 50 is both offset in the longitudinal (X) direction from rotation axis 71, and in the lateral (Y) direction perpendicular to the central axis 22 of bore 21. While it is well known in the art to provide two eccentricities to a rotating butterfly valve, is not common to do so in the context of rotary valves of the type contemplated herein. The implementation of the double off-set described herein not only provides a cam-like action of the top sealing surface 51 of closure member 50 as it is pivoted off-center and providing limited axial movement of sealing surface 51 during the final movement thereof to preload the sealing interaction between sealing surface 51 and valve seat member 42; but further permits valve closure member 50 to be rotated substantially radially outside of the central flow path 23 defined within bore 21 when pivoted to open position, thereby permitting unobstructed product flow through valve body 20.

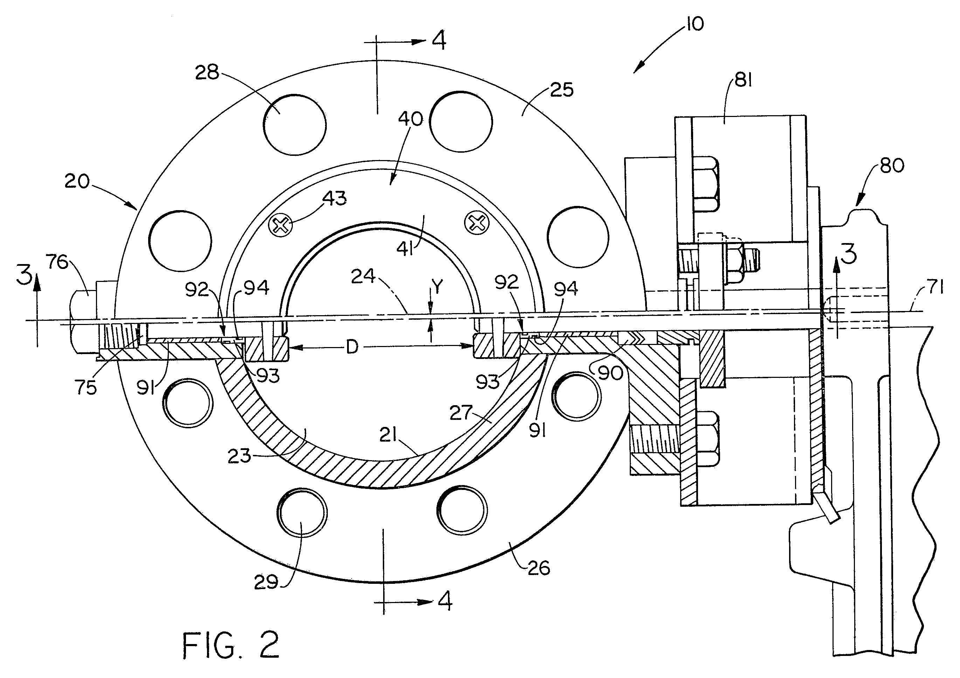

In use, rotary outlet valve 10 is close coupled to the outlet opening of a product vessel or mixing chamber (not shown) such that upper surface 41 of valve seat assembly 40 is substantially flush-mounted with such outlet. It is preferred that the diameter D of central flow path 23 of outlet valve 10 be selected to correspond to the flow diameter desired for such vessel. When flow from such vessel is not desired, closure member 50 would remain in closed position as shown in Figs. 3 and 4. When product flow is desired, source of rotation 80 would be activated either automatically or manually thereby providing rotational force to shaft 70. Rotation of shaft 70 reciprocates closure member 50 from closed position shown in Figs. 3 and 4 to the open position shown by phantom lines in Fig. 4. The open position of valve closure member 50 is also seen in partially sectioned plan view of Fig. 2. It can be seen from these illustrations that when rotated to the open position, rotary outlet valve 10 provides a substantially unobstructed flow path 23 having a diameter D for flow of product through valve body 20.

As mentioned above, support members 52 and 53 are spaced relative one another and depend from the lower surface or under-portion 54 of sealing surface 51. It is preferred that support member 52 and 53 create an arch-like conformation with sealing surface 51, being attached at their lower distal ends adjacent the periphery of bore 21 to shaft 70 and stub shaft 74, respectively. Such arcuate conformation and peripheral attachment of the closure member thereby provides structure which can be rotated to a location substantially radially outside of central flow path 23 to permit unobstructed product flow therethrough. It should also be noted that the double offset eccentric rotation of closure member 50 about rotation axis 71 further augments the ability to rotate the structure of closure member 50 to such open position radially outside central flow path 23. It is preferred that the cross-sectional area of the resulting unobstructed central flow path 23 provided by this novel structure be substantially equal to the cross-sectional area of the outlet opening of the procut vessel to which outlet valve 10 is to be coupled. It can be seen that various applications will require outlet valve structures of correspondingly varying sizes. It should be noted that the exact offset measurements X and Y discussed above would similarly vary between applications and depending upon the amount of axial movement of top sealing surface 51 desired during the final moments of rotation to closed position.

When closure of rotary outlet valve 10 is desired, valve closure member 50 is simply rotated from open position to closed position by rotation source 80 via shaft 70. In this way, top sealing surface 51 is rotated from its open position shown in phantom lines in Fig. 4 eccentrically about rotation axis 71 toward closed position shown in Figs. 3 and 4. As indicated above, the double eccentric design provides limited axial movement of top sealing surface 51 at the final moment of closure to preload sealing surface 51 against valve seat member 42 held within valve seat assembly 40. The specific details of such preloading are described in greater detail in the referenced U.S. Patent 4,289,296, and will not be further discussed herein. It should be noted, however, that during rotation between open and closed positions, due to the double eccentric rotation and the corresponding conformation of sealing surface 51 and valve seat assembly 40, at no time during operation of rotary outlet valve 10 does any part of the sealing surface 51 (or any other part of rotary outlet valve 10) extend outwardly substantially beyond upper surface 41.

This is important in applications where agitation devices are operating within the product vessel in close proximity to the outlet opening thereof. As described above, once rotated into its preloaded sealing position with valve seat 42, top sealing surface 51 interacts with valve seat assembly 40 to provide a substantially (and preferably planar) sealing face at the outlet opening of the vessel which is substantially free of cavities within which product might collect.

Another advantageous feature of the novel structure of valve closure member 50 and its connection to shaft 70 and stub shaft 74 is the unique self-draining characteristics of outlet valve 10 when in closed position. Particularly, as can be seen best in Fig. 3, when rotated to closed position, the arch-like conformation and peripheral attachment of support members 52 and 53, respectively, provides a valve assembly which allows product remaining within valve body 20 to self-drain therefrom. This self-draining feature can facilitate maintenance of rotary outlet valve 10 and extend its effective useful life by minimizing the buildup of product therewithin. In this regard, the inner surfaces of bore 21 within valve body 20 can preferably be formed to augment the self-draining features to direct product residue and the like toward the outlet end of bore 21. Angled surfaces such as identified at 47 and 48 are shown as an example of internal surface conformation which can aid in the self-draining features.

The under-surface 54 of closure member 50 is also shown as having a substantially continuous curved or arcuate shape which, in addition to facilitating rotation of closure member 50 to a point radially outside of flow path 23, also helps augment the self-draining characteristics of the valve.

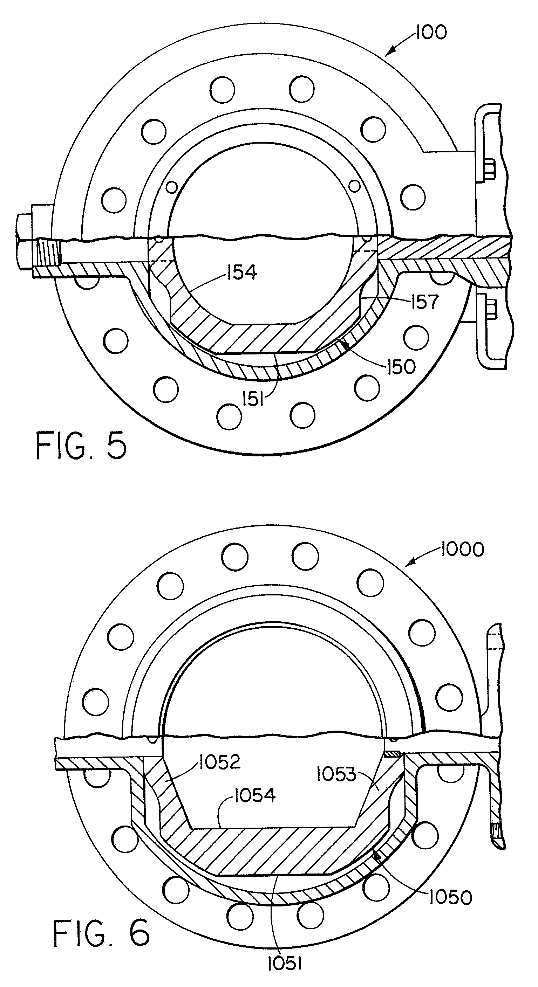

Figs. 5 and 6 illustrate alternate embodiments of rotary valve structures made in accordance with the subject invention, and feature alternate shapes of the closure member of the subject invention. In particular, Fig. 5 illustrates rotary outlet valve 100 having a closure member 150 featuring a substantially flattened central portion in its top sealing surface 51. Additionally, closure member 150 is formed with a substantially vertical portion 157 about its outer periphery, and further includes a substantially flattened center portion within its under surface 154. Alternatively, Fig. 6 shows rotary outlet valve 1000 with its closure member 1050 also featuring a substantially flattened area in the center of its top sealing surface 1051. Additionally, closure member 1050 includes a substantially flat under-surface 1054, with support members 1052 and 1053 depending downwardly and radially outwardly therefrom. These embodiments illustrate that the exact shape of closure member 50 and its individual elements can vary relatively broadly within the scope of the present invention, and the arch-shaped conformation of the under surface and support members of closure member 50 can assume a variety of rectilinear and/or curvilinear combinations.

Consequently, various modifications of the described invention will be apparent to those skilled in the art. Examples of several of such variations have been mentioned and discussed above. Further adaptions could be made by one of ordinary skill in the art without deviating from the scope of the invention. Accordingly, the scope of the present invention should be considered in terms of the following claims and is understood not to be limited to the details of structure and operation described and shown in the specification and drawings.

## Claims

1. A rotary outlet valve for an outlet opening of a product vessel, said valve comprising:

(a) a valve body having a bore formed therethrough along a central axis, said bore providing a central flow path for product through said valve body;

(b) a valve seat assembly located on the valve body and circumscribing one end of said bore, said valve seat assembly having an upper surface designed to be close coupled to an outlet opening of a vessel and including a seat member;

(c) a valve closure member rotatably mounted within said valve body for rotation between open and closed positions, said closure member comprising a top sealing surface which sealingly interacts with said seat member of the valve seat assembly when the closure member is in closed position, and a pair of oppositely disposed spaced support members depending from the under-portions of said sealing surface for rotatably mounting said closure member within the valve body; and

(d) means for providing rotational movement to said closure member about a rotation axis, said rotational means being attached to at least one of the spaced support members within said valve body along said rotation axis and adjacent the periphery of said bore such that when said closure member is rotated to open position within the valve body, said rotational means and the attached closure member are located substantially radially outside of said central flow path, thereby permitting unobstructed product flow along said central axis.

2. The rotary outlet valve of claim 1, wherein said rotational means comprises a shaft rotatable about said rotation axis.

3. The rotary outlet valve of claim 1, wherein said top sealing surface is longitudinally offset relative said rotation axis, and said rotation axis is laterally offset in a direction perpendicular to said central axis, such that said top sealing surface is rotated in a double eccentric manner between open and closed positions, such eccentric movement facilitating the rotation of said closure member to a location radially outside of said central flow path.

4. The rotary outlet valve of claim 1, wherein said sealing surface has a conformation designed to correspond to said valve seat assembly and the outlet opening of a vessel to which said valve is to be coupled such that at no time during operation of the valve does any part of said sealing surface extend outwardly substantially beyond said upper surface.

5. The rotary outlet valve of claim 3, wherein as a result of said eccentric rotation and the structure of said sealing surface which is designed to correspond to said valve seat assembly and the outlet opening of a vessel to which said valve is to be coupled, at no time during operation of the valve does any part of said sealing surface extend outwardly substantially beyond said upper surface.

6. The rotary outlet valve of claim 1, wherein said sealing surface and said valve seat assembly interact in closed position to provide a substantially uniform sealing face at the outlet opening of a vessel which is substantially free of cavities within which product might collect.

7. The rotary outlet valve of claim 1, wherein the cross-sectional area of the resulting unobstructed central flow path provided is substantially equal to the cross-sectional area of an outlet opening of the product vessel to which the valve is to be coupled.

8. The rotary outlet valve of claim 1, wherein the structure of said valve body and said closure member is self-draining when said closure member is in closed position, whereby product within said valve body in closed position tends to automatically drain therefrom.

9. The rotary outlet valve of claim 1, wherein said closure member comprises an overall arch-shaped conformation attached to said shaft at the opposite distal ends of said spaced support members adjacent the periphery of the bore of said valve body, whereby said arch-shaped closure member can be rotated substantially out of the flow path of the product in open position.

10. The rotary outlet valve of claim 2, wherein said shaft is rotatably mounted upon bearings, and wherein a means for isolating said bearings from product with said valve body is provided.

11. A rotary outlet valve for an outlet opening of a product vessel, said valve comprising:

(a) a valve body having a bore formed therethrough along a central axis, said bore providing a central flow path for product through said valve body;

(b) a valve seat assembly located on the valve body and circumscribing one end of said bore, said valve seat assembly having an upper surface designed to be close coupled to an outlet opening of a vessel and including a seat member;

(c) a valve closure member mounted within said valve body for rotation about a rotation axis between open and closed positions, said closure member comprising a top sealing surface which sealingly interacts with said seat member of the valve seat assembly when the closure member is in closed position, and a pair of oppositely disposed spaced support members depending from the under-portions of said sealing surface for rotatably mounting said closure member within the valve body, said top sealing surface being longitudinally offset from said rotation axis by said spaced support members for eccentric rotation thereabout; and

(d) a shaft rotatable about a rotation axis to provide rotational movement to said closure member, said rotation axis being laterally offset from said central axis in a direction perpendicular thereto, and said shaft being attached to at least one of the spaced support members within said valve body along said rotation axis at one or more connection points adjacent the periphery of said bore such that when said closure member is eccentrically rotated to open position within the valve body, said shaft and the attached closure member are located substantially radially outside of said central flow path thereby permitting unobstructed product flow therealong.

12. The rotary outlet valve of claim 11, wherein as a result of said eccentric rotation and the conformation of said sealing surface which is designed to correspond to said valve seat assembly and the outlet opening of a vessel to which said valve is to be coupled, at no time during operation of the valve does any part of said sealing surface extend outwardly substantially beyond said upper surface.

13. The rotary outlet valve of claim 11,

said sealing surface and said valve seat assembly interact in closed position to provide a substantially uniform sealing face at the outlet opening of a vessel which is substantially free of cavities within which product might collect.

14. The rotary outlet valve of claim 11, wherein the cross-sectional area of the resulting unobstructed central flow path provided is substantially equal to the cross-sectional area of an outlet opening of the product vessel to which the valve is to be coupled.

15. The rotary outlet valve of claim 11, wherein the structure of said valve body and said closure member is self-draining when said closure member is in closed position, whereby product within said valve body in closed position tends to automatically drain therefrom.

16. The rotary outlet valve of claim 11, wherein said closure member comprises an overall arch-shaped conformation and is attached to said shaft at the opposite distal ends of spaced support members adjacent the periphery of said valve body, whereby said arch-shaped closure member can be rotated substantially out of the flow path of the product in open position.

17. The rotary outlet valve of claim 11, wherein said shaft is rotatably mounted upon bearings, and wherein a means for isolating said bearings from product with said valve body is provided.

18. A rotary outlet valve for an outlet opening of a product vessel, wherein such vessel includes a product agitator device therewithin which operates adjacent said outlet opening, said valve comprising:

(a) a valve body having a bore formed therethrough along a central axis, said bore providing a central flow path for product through said valve body;

(b) a valve seat assembly located on the valve body and circumscribing one end of said bore, said valve seat assembly having an upper surface designed to be close coupled to the outlet opening of a vessel without interfering with the agitator device within such vessel, and including a seat member adjacent the periphery of said assembly;

(c) a valve closure member rotatably mounted within said valve body for rotation about a rotation axis between open and closed positions, said closure member comprising a top sealing surface which sealingly interacts with said seat member of the valve seat assembly when the closure member is in closed position and at no time during its operation extends substantially beyond said upper surface of the valve seat assembly, and a pair of oppositely disposed spaced support members depending from the under-portions of said sealing surface for rotatably mounting said closure member within the valve body, said top sealing surface being longitudinally offset from said rotation axis by said spaced support members; and

(d) a shaft rotatable about a rotation axis to provide rotational movement to said closure member, said rotation axis being laterally offset from said central axis in a direction perpendicular thereto, and said shaft being attached to at least one of the spaced support members within said valve body along said rotation axis at one or more connection points adjacent the periphery of said bore to provide eccentric rotation to said valve closure member, such that when said closure member is eccentrically rotated to open position within the valve body, said shaft and the attached closure member are located substantially radially outside of said central flow path thereby permitting unobstructed product flow along said path.

19. The rotary outlet valve of claim 18, wherein said sealing surface and said valve seat assembly interact in closed position to provide a substantially uniform sealing face at the outlet opening of a vessel which is substantially free of cavities within which product might collect.

20. The rotary outlet valve of claim 18, wherein said closure member comprises an overall arch-shaped conformation and is attached to said shaft at the opposite distal end of at least one of said spaced support members adjacent the periphery of said valve body, whereby said arch-shaped closure member can be rotated substantially out of the flow path of the product in open position.

FIG. 1

FIG. 2

EP 0 304 389 A2

FIG. 3

FIG. 4

FIG. 5

FIG. 6